# EUROPEAN PATENT APPLICATION

(11) **EP 4 632 341 A1**
(43) Date of publication of application: **15.10.2025**
(21) Application number: 24169111.2
(22) Date of filing: 09.04.2024
(51) Int. Cl.: G01J 3/02, G06F 1/16, H04M 1/02, H04M 1/21

(54) **MECHANICAL PROTECTION CASE FOR SMART PHONE WITH INTEGRATED FUNCTIONALITY**

(71) Applicant: trinamiX GmbH, 67063 Ludwigshafen am Rhein (DE)
(72) Inventor: HASER, Nico, 67059 Ludwigshafen am Rhein (DE); MOHAN OEGUEN, Celal, 67059 Ludwigshafen am Rhein (DE)
(74) Representative: Altmann Stößel Dick Patentanwälte PartG mbB

(57) **Abstract**

The present invention relates to protective case (110) for a mobile device (115), the protective case (110) comprising:
(1) at least one calibration target (112), wherein the calibration target (112) is configured for being illuminated by illumination light (152) of a spectrometer device (114) comprised by the mobile device (115) in order to generate detection light (154) from the calibration target (112) during a calibration process of the spectrometer device (114) when the mobile device (115) is arranged in the protective case (110).

## Description

### Technical Field

The invention relates to a protective case for a mobile device, a system, a method for operating a mobile device and a method for driving a cover comprised by a protective case, a computer program and a non-transitory computer-readable storage medium.

The methods and devices according to the present invention specifically may be employed for example in various areas of daily life, security technology, gaming, traffic technology, production technology, photography such as digital photography or video photography for arts, documentation or technical purposes, safety technology, information technology, agriculture, crop protection, maintenance, cosmetics, medical technology or in the sciences. However, other applications are also possible.

### Background art

Spectrometer devices may require accessories for performing calibrations and/or measurements. An example may be reference targets that are require for in-field calibrations of the spectrometer device. Particular when bringing spectrometer devices to the consumer market, this may be a disadvantage, since end users may not be willing to carry needed accessories with them. The usability and user acceptance might, thus, be restricted if not all required accessories are attached to the spectroscopic device.

On the other, spectrometer devices may be comprised mobile device, such as smart phones, which are frequently used with protective cases.

### Problem to be solved

It is therefore desirable to provide a protective case for a mobile device, a system, a method for operating a mobile device and a method for driving a cover comprised by a protective case, a computer program and a non-transitory computer-readable storage medium, which at least partially address the above-mentioned technical challenges and at least substantially avoid the disadvantages of known methods and devices.

In particular, it may be an object of the present invention to provide methods and devices that increase a user acceptance and ease the daily use of the spectrometer device.

In particular, it may be an object of the present invention to provide methods and devices organize the accessory required to do spectroscopy in a manner that the user has everything in hand.

In particular, it may be an object of the present invention to provide methods and devices that provide an automated calibration process in order to increase accuracy and reliability of the spectroscopic measurements.

### Summary

This problem is addressed by the protective case for a mobile device, the system, the method for operating a mobile device and the method for driving a cover comprised by a protective case, the computer program and the non-transitory computer-readable storage medium with the features of the independent claims. Advantageous embodiments which might be realized in an isolated fashion or in any arbitrary combinations are listed in the dependent claims as well as throughout the specification.

In a first aspect, a protective case for a mobile device is disclosed, the protective case comprising:
(1) at least one calibration target, wherein the calibration target is configured for being illuminated by illumination light of a spectrometer device comprised by the mobile device in order to generate detection light from the calibration target during a calibration process of the spectrometer device when the mobile device is arranged in the protective case, particularly during at least one calibration measurement.

For this aspect, reference may be made to any definition, Embodiment and/or further aspect as disclosed elsewhere herein.

The term "protective case" as used herein is a broad term and is to be given its ordinary and customary meaning to a person of ordinary skill in the art and is not to be limited to a special or customized meaning. The term specifically may refer, without limitation, to an accessory for a device configured for safeguarding the device from at least one arbitrary from of damage. The protective case may be a mechanical protection case configured for safeguarding the device from mechanical damage, such as scratches, dents, drops and impacts. The protective case may be, typically, made of at least one material configured for absorbing mechanical stress. The material may be selected from at least one of: plastic, rubber, silicone, leather, metal, wood, glas, fabric. A protective case may be a specific case for a specific mobile device or a specific type of mobile device.

The protective case may comprise a case body. The case body may comprise a rear cover configured to cover the backside of the mobile device. The case body may comprise at least one side cover configured to cover the side of the mobile device. The case body may comprise at least one movable front cover configured to cover the display of the mobile device.

The mobile device may be reversibly attachable to the protective case. When the mobile is attached to the protective case, the mobile device may be arranged in the protective case. For the mobile device being reversibly attachable to the protective case, the protective case may comprise a mechanism. The mechanism may be at least one of: a snap-on mechanism, a slide-in mechanism, a locking mechanism, a magnet hold mechanism, an adhesive mechanism, a fast-screw mechanism. The snap-on mechanism may be formed by the side cover being a deformable lip.

The calibration target may be arranged at the back side of the protective case.

The term "mobile device" as used herein is a broad term and is to be given its ordinary and customary meaning to a person of ordinary skill in the art and is not to be limited to a special or customized meaning. The term specifically may refer, without limitation, to a mobile electronics device more specifically to a mobile communication device, configured for providing access to at least one telecommunication network, such as a cell phone, smart phone or a wearable. The mobile device may be a portable device.

The term "portable" as used herein is a broad term and is to be given its ordinary and customary meaning to a person of ordinary skill in the art and is not to be limited to a special or customized meaning. The term specifically may refer, without limitation, to the property of at least one object of being moved by human force, such as by a single user. Specifically, the object characterized by the term "portable" may have a weight not exceeding 10 kg, specifically not exceeding 5 kg, more specifically not exceeding 1 kg or even not exceeding 500 g. Additionally or alternatively, the dimensions of the object characterized by the term "portable" may be such that the object extends by no more than 0.3 m into any dimension, specifically by no more than 0.2 m into any dimension. The object, specifically, may have a volume of no more than 0.03 m³, specifically of no more than 0.01 m³, more specifically no more than 0.001 m³ or even no more than 500 mm3. In particular, as an example, the portable spectrometer device may have dimensions of e.g. 10 mm by 10 mm by 5 mm. Specifically, the portable spectrometer device may be part of a mobile device or may be attachable to a mobile device, such as a notebook computer, a tablet, a cell phone, such as a smart phone, a smart watch and/or a wearable computer, also referred to as "wearable", e.g. a body borne computer such as a wrist band or a watch. In particular, the a weight of the spectrometer device, specifically the portable spectrometer device, may be in the range from 1 g to 100 g, more specifically in the range from 1 g to 10 g.

The term "calibration target" as used herein is a broad term and is to be given its ordinary and customary meaning to a person of ordinary skill in the art and is not to be limited to a special or customized meaning. The term specifically may refer, without limitation, to a reference object having known characteristics, such as a predetermined and/or a predefined, describing the interaction with light. The calibration target may be used to calibrate the spectrometer device. The term "calibration measurement" may refer to spectral information being generated from the calibration target.

The calibration target may comprise at least one diffusive reflective surface. The term "diffuse reflective surface" as used herein is a broad term and is to be given its ordinary and customary meaning to a person of ordinary skill in the art and is not to be limited to a special or customized meaning. The term specifically may refer, without limitation, to a surface configured for scattering incident light at a plurality of different angles, e.g. in ideal case Lambertian reflection. The calibration target may have diffusive scattering properties and a reflectance not equal to zero. Specifically, the calibration target may function as a diffuse mirror. The calibration target may comprise a surface roughness configured for generating a Lambertian reflection profile. The surface roughness may be selected such that a specular reflection on the surface has a Lambertian profile due to a ratio of the wavelength of the incident radiation and the surface roughness, thereby creating a "diffuse mirror". The surface roughness may be selected depending on the wavelength of the impinging light, e.g. such that the reflection (e.g. Fresnel reflection generated by a metal or partial Fresnel and partial diffuse reflection generated by a dielectric material) has a Lambertian profile.

For example, the calibration target comprises one or more of: at least one layer of Polytetrafluoroethylene (PTFE), at least one optical coating, such as a white surface coating, e.g. available from Nextel^{®} Suede coating 3101, a dielectric coating, at least one partially reflective dielectric mirror, at least one metal coating or metal foil comprising one or more of gold, silver, aluminum, chromium, and at least one beam splitter. For example, the calibration target may be applied to the substrate by one or more of spray coating, stamping, printing, gluing, at least one squeegee process.

The substrate may be at least partially covered by the calibration target. The calibration target may cover 0.1 to 99.9 % of the substrate, specifically 0.5 to 25 % of the substrate, more specifically 1 to 10% of the substrate. For example, 1 to 10 % of the substrate may be covered by the calibration target and a rest, e.g. of 99 to 90% may be used for the first optical path for measuring the object.

The calibration target may comprise at least one white reflection element such as a coating, film or foil. The term "white" as used herein is a broad term and is to be given its ordinary and customary meaning to a person of ordinary skill in the art and is not to be limited to a special or customized meaning. The term specifically may characterize, without limitation, the reflection of the element, i.e. that the reflection is essentially wavelength independent in the wavelength range of interest, in particular that there are no dominant absorption peaks in the reflection spectrum of the element in the given wavelength range. The term "white reflection element" as used herein is a broad term and is to be given its ordinary and customary meaning to a person of ordinary skill in the art and is not to be limited to a special or customized meaning. The term specifically may refer, without limitation, to a material layer having an at least partially diffusive reflective surface. The white reflection element may provide a diffusive reflective surface. The white reflection element may be semi-transparent at at least one given wavelength range. The wavelength range for which the white reflection element is semi-transparent may be selected such that it matches at least partially the wavelength range of the light source. However, the wavelength range for which the white reflection element may be different from the wavelength range of the light source, e.g. narrower. The white reflection element may be configured for at least partially reflecting and/or partially transmitting incident light. The white reflection element may comprise one or more of at least one layer of Polytetrafluoroethylene (PTFE), at least one optical coating, such as a white surface coating, e.g. a white varnish available from Nextel^{®} Suede coating 3101.

The white reflection element may be arranged directly on the substrate. The term "arranged directly" as used herein is a broad term and is to be given its ordinary and customary meaning to a person of ordinary skill in the art and is not to be limited to a special or customized meaning. The term specifically may refer, without limitation, to application without any further element between the substrate and the white reflection element. For example, white reflection element may be coated, e.g. spray coated, on the substrate. However, other processes may be possible such as stamping, printing, gluing, at least one squeegee process and the like.

The calibration target may comprise at least one carrier element via which the white reflection element is arranged onto the substrate. The term "carrier element" as used herein is a broad term and is to be given its ordinary and customary meaning to a person of ordinary skill in the art and is not to be limited to a special or customized meaning. The term specifically may refer, without limitation, to at least one element and/or layer arranged between two other elements, e.g. the substrate and the white reflection element. The carrier element may be configured for providing at least one supporting function for mounting at least one further element of the calibration target onto the substrate. For example, the white reflection element and the carrier element may function together as calibration target and/or the carrier element may support the white reflection element. The carrier element may be diffuse reflective in at least one wave-length range. The carrier element may comprise at least one reflection material. The white reflection element may be semi-transparent. The carrier element may be configured for scattering light upon transmission of the white reflection element. Thus, the reflective carrier can increase overall reflectivity. The mounting of the white reflection element onto the carrier element may be performed e.g. using a transparent adhesive, e.g., epoxy glue, or in at least one spray coating (varnish) process. However, other processes are possible.

In one embodiment, the module cover window may comprise a stack. The stack may comprise at least the white reflection element, the carrier element and the substrate. In one embodiment, the stack may comprise the carrier element, with the white reflection element coated thereon, wherein the carrier element is coated directly onto the substrate. For example, the carrier element comprises at least one metal layer comprising one or more of gold, silver, aluminum, chromium, wherein the metal layer is coated onto the substrate, e.g. in at least one thin-film process. In an embodiment, the stack may comprise the carrier element, with the white reflection element coated thereon, which is mounted to the substrate by using at least one adhesive. For example, the carrier element comprises a metal film fixed to the substrate by means of an adhesive. In one embodiment, the stack may comprise the carrier element mounted to the substrate by using at least one adhesive and the white reflection element is mounted to the carrier element by using at least one transparent adhesive. For example, the carrier element comprises a metal film which is fixed by an adhesive on the substrate, wherein the white reflective element is a reflective coating which is fixed by a transparent adhesive on the carrier element.

For example, the white reflective element comprises at least one layer of PTFE and the carrier element further may comprise at least one aluminum foil functioning as a reflector. The layer of PTFE may be mounted on the aluminum foil using a transparent adhesive. The PTFE may function as diffusor and can in combination with the reflector function as calibration target.

The module cover window is at least partially structured. The term "structured" as used herein is a broad term and is to be given its ordinary and customary meaning to a person of ordinary skill in the art and is not to be limited to a special or customized meaning. The term specifically may refer, without limitation, to a non-uniform distribution of one element.

For example, the calibration target may be non-uniformly distributed on the substrate. For example, the calibration target may comprise at least one pattern. The term "pattern" as used herein is a broad term and is to be given its ordinary and customary meaning to a person of ordinary skill in the art and is not to be limited to a special or customized meaning. The term specifically may refer, without limitation, to an arbitrary structured element. The pattern may be at least one pattern selected from the group consisting of a dot pattern, a checkerboard pattern or a random pattern, or any other pattern, which feature a macroscopic 2D homogeneity over the surface area of the calibration target. The pattern may be embodied such that the pattern only partially covers the substrate. For example, the white reflection element may be structured in such a way that itself is scattering the light for a given wavelength range.

The term "spectrometer device" as used herein is a broad term and is to be given its ordinary and customary meaning to a person of ordinary skill in the art and is not to be limited to a special or customized meaning. The term specifically may refer, without limitation, to an optical device configured for acquiring at least one item of spectral information on at least one object. Specifically, the at least one item of spectral information may refer to at least one optical property or optically measurable property which is determined as a function of a wavelength, for one or more different wavelengths. More specifically, the optical property or optically measurable property, as well as the at least one item of spectral information, may relate to at least one property characterizing at least one of a transmission, an absorption, a reflection and an emission of the at least one object, either by itself or after illumination with external light. The at least one optical property may be determined for one or more wavelengths. The spectrometer device specifically may form an apparatus which is capable of recording a signal intensity with respect to the corresponding wavelength of a spectrum or a partition thereof, such as a wavelength interval, wherein the signal intensity may, specifically, be provided as an electrical signal which may be used for further evaluation.

As further used herein, the term "light" as used herein is a broad term and is to be given its ordinary and customary meaning to a person of ordinary skill in the art and is not to be limited to a special or customized meaning. The term specifically may refer, without limitation, to electromagnetic radiation in one or more of the infrared, the visible and the ultraviolet spectral range.

Herein, the term "ultraviolet spectral range", generally, refers to electromagnetic radiation having a wavelength of 1 nm to 380 nm, preferably of 100 nm to 380 nm. Further, in partial accordance with standard ISO-21348 in a valid version at the date of this document, the term "visible spectral range", generally, refers to a spectral range of 380 nm to 760 nm. The term "infrared spectral range" (IR) generally refers to electromagnetic radiation of 760 nm to 1000 µm, wherein the range of 760 nm to 1.5 µm is usually denominated as "near infrared spectral range" (NIR) while the range from 1.5 µ to 15 µm is denoted as "mid infrared spectral range" (MidIR) and the range from 15 µm to 1000 µm as "far infrared spectral range" (FIR). Preferably, light used for the typical purposes of the present invention is light in the infrared (IR) spectral range, more preferred, in the near infrared (NIR) and/or the mid infrared spectral range (MidIR), especially the light having a wavelength of 1 µm to 5 µm, preferably of 1 µm to 3 µm. This is due to the fact that many material properties or properties on the chemical constitution of many objects may be derived from the near infrared spectral range. It shall be noted, however, that spectroscopy in other spectral ranges is also feasible and within the scope of the present invention.

Consequently, the term "light emitting element", also referred to as an "illumination source", as used herein is a broad term and is to be given its ordinary and customary meaning to a person of ordinary skill in the art and is not to be limited to a special or customized meaning. The term specifically may refer, without limitation, to an arbitrary device configured for generating or providing light, specifically "first light", "second light" in the sense of the above-mentioned definition for the term "light". The light emitting element specifically may be or may comprise at least one electrical light source. The "first light", "second light" that is emitted by the respective light emitting element may be referred to as "illumination light".

As further used herein, the term "detection light" as used herein is a broad term and is to be given its ordinary and customary meaning to a person of ordinary skill in the art and is not to be limited to a special or customized meaning. The term specifically may refer, without limitation, to light that is generated by the object, particularly generated in an interaction of the illumination light with the object. The light may interact with the object by scattering, reflecting and/or transmitting. The detection light may be first light and/or second that is reflected and/or scattered back through the sample interface to the at least one detector. At least a portion of the illumination light may be transmitted and/or absorbed by the object in a manner that it is not detected by the at least one detector.

The calibration target may be or may comprise a material selected from at least one of: at least one layer of Polytetrafluoroethylene (PTFE), at least one optical coating, such as a white surface coating or at least one color coating, e.g. a near infra-red reflecting color coating, a dielectric coating, at least one partially reflective dielectric mirror, at least one metal coating or metal foil comprising one or more of gold, silver, aluminum, chromium, and at least one beam splitter; at least one optical grating; at least one ceramics; at least one leather, such as suede leather.

The term "calibration" as used herein is a broad term and is to be given its ordinary and customary meaning to a person of ordinary skill in the art and is not to be limited to a special or customized meaning. The term specifically may refer, without limitation, to a procedure of determining a compensation for at least one deviation between a known reference value and a measurement value generated in the calibration process.

The protective case may further comprise
(2) at least one aperture, wherein the aperture is arranged in a manner that at least one object is illuminated by the illumination light of the spectrometer device in order to generate detection light from the object during a spectral measurement process using the spectrometer device when the mobile device is arranged in the protective case, particularly during at least one object measurement.

Since the protective case may be a specific case for a specific mobile device or a specific type of mobile device, the position of the aperture may be selected in a manner that light that is supposed to leave and/or enter the spectrometer device is not blocked by the protective case but can travers through the aperture.

The "object" may, generally, be an arbitrary body, chosen from a living object and a non-living object. Thus, as an example, the at least one object may comprise one or more articles and/or one or more parts of an article, wherein the at least one article or the at least one part thereof may comprise at least one component which may provide a spectrum suitable for investigations. Additionally or alternatively, the object may be or may comprise one or more living beings and/or one or more parts thereof, such as one or more body parts of a human being, e.g. a user, and/or an animal. The term "spectral measurement process" may refer to spectral information being generated from the object.

The measurement on the object may be performed in order to obtain spectral information on the object. The term "spectral information", also referred to as "spectroscopic information" or as "an item of spectral information", as used herein is a broad term and is to be given its ordinary and customary meaning to a person of ordinary skill in the art and is not to be limited to a special or customized meaning. The term specifically may refer, without limitation, to an item of information, e.g. on at least one object and/or radiation emitted by at least one object, characterizing at least one optical property of the object, more specifically at least one item of information characterizing, e.g. qualifying and/or quantifying, at least one of a transmission, an absorption, a reflection and an emission of the at least one object. As an example, the at least one item of spectral information may comprise at least one intensity information, e.g. information on an intensity of light being at least one of transmitted, absorbed, reflected or emitted by the object, e.g. as a function of a wavelength or wavelength sub-range over one or more wavelengths, e.g. over a range of wavelengths. Specifically, the intensity information may correspond to or be derived from the signal intensity, specifically the electrical signal, recorded by the spectrometer device with respect to a wavelength or a range of wavelengths of the spectrum.

When the aperture is arranged in a manner that the object is illuminated by the illumination light of the spectrometer device in order to generate the detection light from the object during the spectral measurement process using the spectrometer device, at least one of: a beam path of the illumination light; a beam path of the detection light; may traverse the aperture. The term "aperture" as used herein is a broad term and is to be given its ordinary and customary meaning to a person of ordinary skill in the art and is not to be limited to a special or customized meaning. The term specifically may refer, without limitation, to an opening through which light beam is emitted or received. The opening may be free of any material. Alternatively, the aperture may comprises a window that is transparent for at least one of: the illumination light; the detection light.

The protective case may further comprise:
(3) at least one cover, wherein the calibration target is comprised by the cover, wherein the cover is mechanically moveable in a manner that
∘ in a first position of the cover, the calibration target is illuminated by the illumination light in order to generate the detection light from the calibration target during the calibration process when the mobile device is arranged in the protective case, particularly during the at least one calibration measurement;
∘ in a second position of the cover, the object is illuminated by the illumination light in order to generate the detection light from the object during the spectral measurement process when the mobile device is arranged in the protective case, particularly during at least one object measurement;
∘ optionally in a third position of the cover, wherein any light, such as at least one of:
   ∘ environmental light;
   ∘ illumination light;
   is prevented from entering the spectrometer device, particularly wherein for preventing any light from entering the spectrometer device, a sample interface of the spectrometer device is fully covered by the cover and no illumination light is emitted by the spectrometer device.

The first position of the cover may be used as the third position; or vice versa. The at least one cover may be permanently secured to the protection case.

The term "cover" as used herein is a broad term and is to be given its ordinary and customary meaning to a person of ordinary skill in the art and is not to be limited to a special or customized meaning. The term specifically may refer, without limitation, to at least one arbitrary object used to close the aperture. The cover may be non transparent to the illumination light and/or the detection light. Consequently, the cover may be opaque for the illumination light and/or the detection light. The cover may block the illumination light and/or the detection light.

The term "mechanically moveable" as used herein is a broad term and is to be given its ordinary and customary meaning to a person of ordinary skill in the art and is not to be limited to a special or customized meaning. The term specifically may refer, without limitation, to an arbitrary object being displaceable, particularly in a manner that the arbitrary object changes its position and/or pose.

In the first position of the cover, the beam path of the illumination light may impinge on the calibration target comprised by the cover when the mobile device is arranged in the protective case, particularly in a manner that the calibration target generates the detection light. For this purpose, in the first position of the cover the cover may cover the aperture.

In the second position of the cover, the beam path of the illumination light and the detection light may be free of an influence of the cover when the mobile device is arranged in the protective case, specifically free from being blocked by the cover, particularly in a manner that the illumination light and/or the detection light travers the aperture. In the second position of the cover the cover may leave the aperture at least partially uncovered.

For the cover being mechanically moveable, the cover may be or may comprise at least one of: a sliding mechanism; a rotating mechanism; a folding mechanism. The respective mechanism may be used to bring the cover in the first position, the second position and/or the third position.

The protective case may further comprise:
(4) one or more further apertures, wherein the one or more further apertures are arranged in a manner that at least one lens of at least one image generation unit comprised by the mobile device is uncovered by the protective case during a measurement process using the image generation unit when the mobile device is arranged in the protective case.

The term "image generation unit" as used herein is a broad term and is to be given its ordinary and customary meaning to a person of ordinary skill in the art and is not to be limited to a special or customized meaning. The term specifically may refer, without limitation, to an arbitrary device configured for generating optical measurement data, such as an image. The image generation unit may be a camera, particularly a back camera of the mobile device, specifically a smart phone. The term "camera" as used herein is a broad term and is to be given its ordinary and customary meaning to a person of ordinary skill in the art and is not to be limited to a special or customized meaning. The term specifically may refer, without limitation, to a device having at least one imaging element configured for recording or capturing spatially re-solved one-dimensional, two-dimensional or even three-dimensional optical data or information. As an example, the camera may comprise at least one camera chip, such as at least one CCD chip and/or at least one CMOS chip configured for recording images. As used herein, without limitation, the term "image" specifically may relate to data recorded by using the image generation unit, such as a plurality of electronic readings from the image generation unit, such as the pixels of the camera chip.

In the first position of the cover, the cover may covers the at least one lens of at least one image generation unit, and in the second position of the cover, the at least one lens of the at least one image generation unit may be uncovered by the cover.

The protective case may further comprise:
(5) at least one actuator, wherein the actuator is configured for bringing the cover from the first position into the second position and vice versa.

The mechanical actuator may further be configured bringing the cover into at least one of: the first position; the second position; the third position.

The term "actuator" as used herein is a broad term and is to be given its ordinary and customary meaning to a person of ordinary skill in the art and is not to be limited to a special or customized meaning. The term specifically may refer, without limitation, to an arbitrary device configured for converting energy into mechanical motion. The energy the is converted may be, typically, electrical, hydraulic and/or pneumatic. The mechanical motion generated by the actuator may be move the cover.

The protective case may further comprise:
(6) at least one control unit, wherein the control unit is configured for driving the actuator depending on at least one item of procedure information on the operating state of the spectrometer device.

The term "to drive" as used herein is a broad term and is to be given its ordinary and customary meaning to a person of ordinary skill in the art and is not to be limited to a special or customized meaning. The term specifically may refer, without limitation, to the process of providing one or both of at least one control parameter and/or electrical power to another device. Consequently, the term "control unit" as used herein is a broad term and is to be given its ordinary and customary meaning to a person of ordinary skill in the art and is not to be limited to a special or customized meaning. The term specifically may refer, without limitation, to an arbitrary device or a combination of devices configured for providing one or both of at least one control parameter and/or electrical power to another device, such as, in the present case, to the actuator.

The item of procedure information on the operating state spectrometer device may comprise at least one of:
- information on conducting the calibration procedure of the spectrometer device;
- information on conducting the spectral measurement procedure using the spectrometer device;
- information on conducting no measurement using the spectrometer device or a camera of the mobile device
- information on the position of the cover;
- information on an item of procedure information on the operating state of the mobile device, such as an intended use of the camera of the mobile device.

The control unit may be configured for
- driving the actuator in a manner that the cover is in the first position during a calibration procedure;
- driving the actuator in a manner that the cover is in the second position during the spectral measurement procedure.

The protective case may further comprise:
(7) at least one connection interface, wherein the connection interface is configured for receiving the item of procedure information on the operating state of the spectrometer device, particularly from the providing mobile device.

The received item of procedure information on an operating state of the spectrometer device may be provided to the control unit.

The term "connection interface" as used herein is a broad term and is to be given its ordinary and customary meaning to a person of ordinary skill in the art and is not to be limited to a special or customized meaning. The term specifically may refer, without limitation, to an item or element forming a boundary configured for transferring information. In particular, the connection interface may be configured for transferring information from a computational device, e.g. a computer, such as to send or output information, e.g. to a further device. Additionally or alternatively, the communication interface may be configured for transferring information onto a computational device, e.g. onto a computer, such as to receive information. The communication interface may specifically provide means for transferring or exchanging information and/or signals. In particular, the communication interface may provide a data transfer connection, e.g. Bluetooth, NFC, inductive coupling or the like.

The protective case may further comprise:
(8) at least one measurement module, wherein the measurement module is reversibly attachable to the protective case, wherein the measurement module is configured for
- bringing at least one specific object in at least one specific pose during the spectral measurement procedure when the mobile device is arranged in the protective case,
particularly in a manner that a measurement spot of the spectrometer device is on a predefined measurement position of the object.

The term "measurement module" as used herein is a broad term and is to be given its ordinary and customary meaning to a person of ordinary skill in the art and is not to be limited to a special or customized meaning. The term specifically may refer, without limitation, to an arbitrary object that is configured for providing at least one specific functionality.

The at least one specific functionality may be bringing the at least one specific object in at least one specific pose during the spectral measurement procedure when the mobile device is arranged in the protective case. This functionality may also be provided by the further measurement module. For this purpose, the measurement module may comprise at least one holder for the object. The holder may be configured to support the object during a measurement procedure. The object may be reversibly attachable to the measurement module or the holder.

The protective case may further comprise:
(9) at least one further measurement module, wherein the further measurement module is reversibly attachable to the protective case, wherein the further measurement module is configured for modifying the beam path of at least one of
- the illumination light,
- the detection light
during the spectral measurement procedure when the mobile device is arranged in the protective case, particularly in a manner that a measurement spot of the spectrometer device is on a predefined measurement position of the object.

The at least one specific functionality may be modifying the beam path of at least one of the illumination light, the detection light during the spectral measurement procedure when the mobile device is arranged in the protective case. This functionality may also be provided by the measurement module. For this purpose, the measurement module may comprise at least one optical component such as an optical lens, an optical mirror and/or an optical aperture. The optical component may shape and/or modify the beam path of the illumination light and the detection light.

The term "reversibly attachable" as used herein is a broad term and is to be given its ordinary and customary meaning to a person of ordinary skill in the art and is not to be limited to a special or customized meaning. The term specifically may refer, without limitation, to a detachable connection between a first unit and a second unit, wherein the connection allows for an easy and/or a repeatable attachment and detachment of the first unit and a second unit. In other words, an "reversible attachment", may be a joined between the first unit and the second unit that is temporarily and/or allows for a separation of the first unit and the second unit, wherein the separation is without causing at least one of: a damage, a permanent alteration; to one or more of the first unit and the second unit. For reversibly attaching the first unit and the second unit, the reversible attachment may be implemented as at least one of: a magnetic connection; a positive connection and/or a form-fit connection; a frictional connection.

The protective case may further comprise::
(10) at least one storage unit, wherein the storage unit is configured for storing at least on accessory, particularly wherein the accessory is selected from at least one of:
- the measurement module;
- the further measurement module;
- a cleaning device.

The term "storage unit" as used herein is a broad term and is to be given its ordinary and customary meaning to a person of ordinary skill in the art and is not to be limited to a special or customized meaning. The term specifically may refer, without limitation, to an arbitrary object configured for receiving at least one accessory. The storage unit may be at least one of: a bag; a holder; a slot, particularly a slot configured to receive at least one of: an SD-card, a stylus, a pen, an indentation in the case combined with a holding mechanism, such as an adhesion, a magnetic or a clip-on.

In a further aspect, a system is disclosed. The system comprises:
- a protective case as disclosed elsewhere herein;
- a mobile device comprising a spectrometer device,
wherein the protective case is configured for receiving the mobile device in a manner that the mobile device is arranged, particularly securely, in the protective case. For this aspect, reference may be made to any definition, Embodiment and/or further aspect as disclosed elsewhere herein.

The spectrometer device may comprise:
1) at least one light emitting element, wherein the light emitting element is configured for emitting illumination light for illuminating at least one of:
   - the at least one calibration target during the calibration procedure;
   - the at least one object during the spectral measurement procedure in order to generate detection light;
2) at least one detector configured for generating at least one detector signal when receiving the detection light;
3) at least one evaluation unit configured for obtaining at least one item of spectral information by evaluating the detector signal.

The light emitting element may be a thermal radiator. The thermal radiator may be selected from an incandescent lamp or a thermal infrared emitter. The term "incandescent lamp" as used herein is a broad term and is to be given its ordinary and customary meaning to a person of ordinary skill in the art and is not to be limited to a special or customized meaning. The term specifically may refer, without limitation, to an electric light having a heatable element, such as a wire filament heated, which is capable of being heated to a temperature at which it emits light, especially infrared light. Since the incandescent lamp can, therefore, be considered as a thermal emitter within the infrared spectral range, an emission power of the incandescent lamp decreases with increasing wavelength. The thermal radiator may be selected from an incandescent lamp or a thermal infrared emitter. The term "thermal infrared emitter" as used herein is a broad term and is to be given its ordinary and customary meaning to a person of ordinary skill in the art and is not to be limited to a special or customized meaning. The term specifically may refer, without limitation, to a micro-machined thermally emitting device, which comprises a radiation emitting surface as the light emitting element that emits the optical radiation to be monitored.

Alternatively or in addition, the light emitting element may be a microelectromechanical system (MEMS)-based emitter. The term "microelectromechanical system (MEMS)-based emitter" as used herein is a broad term and is to be given its ordinary and customary meaning to a person of ordinary skill in the art and is not to be limited to a special or customized meaning. The term specifically may refer, without limitation, to an arbitrary apparatus configured for generating and/or emitting light comprising at least one element, wherein the element is associated with MEMS technology. MEMS technology, typically, involves the manufacture of mechanical and/or electrical elements on a microscale, typically below 1 µm or 100 µm or 1 mm or 5 mm or 50 mm. Alternatively or in addition, the light emitting element may be a laser, specifically a vertical cavity surface emitting laser (VCSEL), particularly emitting at least one wavelength in the infrared region.

The term "vertical-cavity surface-emitting laser" as used herein is a broad term and is to be given its ordinary and customary meaning to a person of ordinary skill in the art and is not to be limited to a special or customized meaning. The term specifically may refer, without limitation, to a semiconductor laser diode configured for laser beam emission perpendicular with respect to a top surface. VCSELs are generally known to the skilled person such as from WO 2017/222618 A.

Alternatively or in addition, the radiation emitting element may be a light-emitting diode (LED), specifically a LED emitting light that is at least partially located in the infrared spectral range. Alternatively or in addition, a LED emitting light that is illuminating a luminescent material, specifically a phosphor, for light-conversion of light generated by the LED, wherein the luminescent material generates converted light that is at least partly located in the near-infrared spectral range.

The term "light-emitting diode" or briefly "LED", as used herein, is a broad term and is to be given its ordinary and customary meaning to a person of ordinary skill in the art and is not to be limited to a special or customized meaning. The term specifically may refer, without limitation, to an optoelectronic semiconductor device capable of emitting light when an electrical current flows through the device. The optoelectronic semiconductor device may be configured for generating the light due to various physical processes, including one or more of spontaneous emission, induced emission, decay of metastable excited states and the like. Thus, as an example, the light-emitting diode, may comprise one or more of: a light-emitting diode based on spontaneous emission of light, in particular an organic light emitting diode, a light-emitting diode based on superluminescence (sLED), or a laser diode (LD) In the following, without narrowing the possible embodiments of the light-emitting diode to any of the before-mentioned physical principles or setups, the abbreviation "LED" will be used for any type of light-emitting diode.

Specifically, the LED may comprise at least two layers of semiconductor material, wherein light may be generated at at least one interface between the at least two layers of semiconductor material, specifically due to a recombination of positive and negative electrical charges, e.g. due to electron-hole recombination. The at least two layers of semiconductor material may have differing electrical properties, such as at least one of the layers being an n-doped semiconductor material and at least one of the layers being a p-doped semiconductor material. Thus, as an example, the LED may comprise at least one pn-junction and/or at least one pin-set up. It shall be noted, however, that other device structures are feasible, too. The at least one semiconductor material may specifically be or may comprise at least one inorganic semiconducting material. It shall be noted, however, that organic semiconducting materials may be used additionally or alternatively.

Generally, the LED may convert electrical current into light, specifically light that is at least partially located in the infrared spectral range. Alternatively or in addition, LED may convert electrical current into light into primary light, more specifically into blue primary light. The LED, thus, specifically may be a blue LED. The LED may be configured for generating the primary light, particularly for the light-conversion in the phosphor, also referred to as the "pump light". Thus, the LED may also be referred to as the "pump LED". The LED specifically may comprise at least one LED chip and/or at least one LED die. Thus, the semiconductor element of the LED may comprise an LED bare chip.

The term "luminescence" as used herein is a broad term and is to be given its ordinary and customary meaning to a person of ordinary skill in the art and is not to be limited to a special or customized meaning. The term specifically may refer, without limitation, to the process of spontaneous emission of light by a substance not resulting from heat. Specifically, luminescence may refer to a cold-body radiation. More specifically, the luminescence may be initiated or excited by irradiation of light, in which case the luminescence is also referred to as "photoluminescence". The property of a material being capable of performing luminescence, in the context of the present invention, is referred to by the adjective "luminescent". The at least one luminescent material specifically may be a photoluminescent material, i.e. a material which is capable of emitting light after absorption of photons or excitation light. Specifically, the luminescent material may have a positive Stokes shift, which generally may refer to the fact that the secondary light is red-shifted with respect to the primary light.

The at least one luminescent material, thus, may form at least one converter, also referred to as a light converter, transforming primary light into secondary light having different spectral properties as compared to the primary light. Specifically, a spectral width of the secondary light may be larger than a spectral width of the primary light, and/or a center of emission of the secondary light may be shifted, specifically red-shifted, compared to the primary light. Specifically, the at least one luminescent material may have an absorption in the ultraviolet and/or blue spectral range and an emission in the near-infrared and/or infrared spectral range. Thus, generally, the luminescent material or converter may form at least one component of the phosphor LED converging primary light or pump light, specifically in the blue spectral range, into light having a longer wavelength, e.g. in the near-infrared or infrared spectral range.

The luminescent material, specifically, may, thus, form at least one converter or light converter. The luminescent material may form at least one of a converter platelet, a luminescent and specifically a fluorescent coating on the LED and phosphor coating on the LED. The luminescent material may, as an example, comprise one or more of the following materials: Cerium-doped YAG (YAG:Ce³⁺, or Y₃Al₅O₁₂:Ce³⁺); rare-earth-doped Sialons; copper- and aluminium-doped zinc sulfide (ZnS:Cu,Al).

The LED and the luminescent material, together, may form a so-called "phosphor LED". Consequently, the term "phosphor light-emitting diode" or briefly "phosphor LED", as used herein, is a broad term and is to be given its ordinary and customary meaning to a person of ordinary skill in the art and is not to be limited to a special or customized meaning. The term specifically may refer, without limitation, to a combination of at least one light-emitting diode configured for generating primary light or pump light, and at least one luminescent material, also referred to as a "phosphor", configured for light-conversion of the primary light generated by the light-emitting diode. The phosphor LED may form a packaged LED light source, including the LED die, e.g. a blue LED emitting blue pump light, as well as the phosphor, which, as an example, fully or partially coats the LED, which is, as an example, configured for converting the primary light or blue light into light having differing spectral properties, specifically into near-infrared light. Generally, the phosphor LED may be packaged in one housing or may be unpackaged. Thus, the LED and the at least one luminescent material for light-conversion of the primary light generated by the light-emitting diode may specifically be housed in a common housing. Alternatively, however, the LED may also be an unhoused or bare LED which may fully or partially be covered with the luminescent material, such as by disposing one or more layers of the luminescent material on the LED die. The phosphor LED, generally, may form an emitter or light source by itself.

The illumination light may have a spectral range at least partially located in the near-infrared spectral range, specifically in the spectral range from 1 to 3 µm, preferably from 1.3 to 2.5 µm, more preferably from 1.5 to 2.2 µm.

The verb "to detect" as used herein is a broad term and is to be given its ordinary and customary meaning to a person of ordinary skill in the art and is not to be limited to a special or customized meaning. The term specifically may refer, without limitation, to the process of at least one of determining, measuring and monitoring at least one parameter, qualitatively and/or quantitatively, such as at least one of a physical parameter, a chemical parameter and a biological parameter. Specifically, the physical parameter may be or may comprise an electrical parameter. Consequently, the term "photosensitive detector", or "detector" as used herein is a broad term and is to be given its ordinary and customary meaning to a person of ordinary skill in the art and is not to be limited to a special or customized meaning. The term specifically may refer, without limitation, to an arbitrary device configured for detecting, i.e. for at least one of determining, measuring and monitoring, at least one parameter, qualitatively and/or quantitatively, such as at least one of a physical parameter, a chemical parameter and a biological parameter. The at least one detector may be configured for generating at least one detector signal, more specifically at least one electrical detector signal, such as an analogue and/or a digital detector signal, the detector signal providing information on the at least one parameter measured by the detector. The detector signal may directly or indirectly be provided by the at least one detector to the evaluation unit, such that the at least one detector and the evaluation unit may be directly or indirectly connected. The detector signals may be used as a "raw" detector signal and/or may be processed or preprocessed before further used, e.g. by filtering and the like. Thus, the at least one detector may comprise at least one processing device and/or at least one preprocessing device, such as at least one of an amplifier, an analogue/digital converter, an electrical filter and a Fourier transformation.

The at least one detector may be configured for detecting light propagating from the object to the spectrometer device or more specifically to the at least one detector of the spectrometer device. The at least one detector may be configured for determining at least one optical parameter, such as an intensity and/or a power of light by which at least one sensitive area of the detector is irradiated. More specifically, the at least one detector may comprise at least one photosensitive element and/or at least one optical sensor, such as at least one of a photodiode, a photocell, a photosensitive resistor, a phototransistor, a thermophile sensor, a photoacoustic sensor, a pyroelectric sensor, a photomultiplier and a bolometer. The at least one detector, thus, may be configured for generating at least one detector signal, more specifically at least one electrical detector signal, in the above-mentioned sense, providing information on at least one optical parameter, such as the power and/or intensity of light by which the detector or a sensitive area of the detector is illuminated. The at least one detector may be a Lead Sulfide (PbS) detector.

The detector may comprise a plurality of photosensitive elements, wherein each of the photosensitive elements may be configured for generating at least one detector signal for deriving the spectral information. The plurality of photosensitive elements may be arranged in an array. The term "array" as used herein is a broad term and is to be given its ordinary and customary meaning to a person of ordinary skill in the art and is not to be limited to a special or customized meaning. The term specifically may refer, without limitation, to a series of optical sensors which may, preferably, be arranged in a single line as a one-dimensional matrix along the length of the length variable filter or in more than one line, especially in two, three, or four parallel lines, in form of a two-dimensional matrix, in particular, in order to receive most of the intensity of the incident light as possible. Thus, a number N of photosensitive elements in one direction may be higher compared to a number M of photosensitive elements in a further direction such that the one-dimensional 1 x N matrix or a rectangular two-dimensional M x N matrix may be obtained, wherein M < 10 and N ≥ 10, preferably N ≥ 20, more preferred N ≥ 50. In addition, the matrixes may also be placed in a staggered arrangement.

The plurality of photosensitive elements may be sensitive to differing, particularly not overlapping, wavelength intervals. Particularly consequently, a first photosensitive element may detect light within a first wavelength range and a second photosensitive element may detect light within a second wavelength range, wherein the first and the second wavelength range are different from each other, particularly in a manner that wavelength ranges do not overlap. There may be a third photosensitive elements having a further different, particularly not overlapping, wave-length range, and so on.

The spectrometer device further may comprise at least one wavelength-selective element, wherein the wavelength-selective element is disposed in at least one of:
- a beam path of the illumination light; or
- a beam path of the detection light.

The at least one the wavelength-selective element may be configured and/or arranged in a manner that any photosensitive element of the plurality of photosensitive elements is exposed to an individual spectral range of detection light.

As used herein, the term "wavelength-selective element" is a broad term and is to be given its ordinary and customary meaning to a person of ordinary skill in the art and is not to be limited to a special or customized meaning. The term specifically may refer, without limitation, to an arbitrary optical element which interacts with differing spectral portions of incident light in a different manner, e.g. by having at least one wavelength-dependent optical property, such as at least one wavelength-dependent optical property selected from the list consisting of a degree of reflection, a direction of reflection, a degree of refraction, a direction of refraction, an absorption, a trans-mission, an index of refraction.

The wavelength-selective element may be configured such that each of the photosensitive detectors may be exposed to the same spectral range of the detection light. The wavelength-selective element may be selected from the group of a tunable wavelength-selective element and a wavelength-selective element having a fixed transmission spectrum. By using a tunable wave-length selective element, as an example, differing wavelength ranges may be selected sequentially, whereas, by using a wavelength-selective element having a fixed transmission spectrum, the selection of the wavelength ranges may be fixed and may, however, be depend-ent e.g. on a detection position, thereby allowing, as an example, in the detection light beam path, for simultaneously exposing different detectors and/or different photosensitive detectors of the detector to differing spectral ranges of light.

Thus the at least one wavelength-selective element may comprise at least one of a filter, a grating, a prism, a plasmonic filter, a diffractive optical element and a metamaterial. More specifically, the spectrometer device may comprise at least one wavelength-selective element disposed in a beam path of the light from the object, i.e. in the beam path of the detection light, wherein the wavelength-selective element, specifically may be configured such that each of the photo-sensi-tive detectors is exposed to an individual spectral range of the light from the object. As an ex-ample, a variable wavelength-selective element may be used, the transmission of which depends on a position on the wavelength-selective element, such that, when the variable wave-length-selective element is placed on top of the array of photosensitive detectors, the individual photosensitive detectors are exposed to differing spectral ranges of the incident light, specifically the detection light from the object.

The wavelength-selective element may be selected from the group of a tunable wavelength-selective element and a wavelength-selective element having a fixed transmission spectrum. The wavelength-selective element may be or may comprise at least one of: a length variable filter; a static filter; a tunable filter, particularly a MEMS Fabry-Perot cavity; an optical lens; a diffractive element.

The term "length variable filter" as used herein is a broad term and is to be given its ordinary and customary meaning to a person of ordinary skill in the art and is not to be limited to a special or customized meaning. The term specifically may refer, without limitation, to an optical filter which comprises a plurality of individual filter elements, preferably a plurality of interference filter elements, which may, in particular, be provided in a continuous arrangement of the individual filter elements. Herein, each of the filter elements may form a bandpass with a variable center wave-length for each spatial position on the filter, preferably continuously, along a single dimension, which is, usually, denoted by the term "length", on a receiving surface of the length variable filter. The variable center wavelength may be a linear function of the spatial position of each filter element, in which case the length variable filter is usually referred to as a "linearly variable filter" or by its abbreviation "LVF". However, other kinds of functions may be applicable to the relation-ship between the variable center wavelength and the spatial position on the individual filter elements. Herein, the individual filter elements may be located on a transparent substrate which may, in particular, comprise at least one material that may show a high degree of optical transparency within in the infrared (IR) spectral range, especially, within the near-infrared (NIR) spectral range as described below in more detail, whereby varying spectral properties, especially continuously varying spectral properties, of the filter along length of the filter may be achieved. In particular, the length variable filter may be a wedge filter that may be adapted to carry at least one response coating on a transparent substrate, wherein the response coating may exhibit a spatially variable property, in particular, a spatially variable thickness. However, other kinds of length variable filters which may comprise other materials or which may exhibit a further spatially variable property may also be feasible. At a normal angle of incidence of an incident light ray or light beam, each of the filter elements as comprised by the length variable filter may have a bandpass width that may amount to a fraction of the center wavelength, typically to a few per-cent, of the particular filter.

The term "static filter" as used herein is a broad term and is to be given its ordinary and customary meaning to a person of ordinary skill in the art and is not to be limited to a special or customized meaning. The term specifically may refer, without limitation, to an optical filter, particularly a bandpass filter, which blocks and/or selects light of a predetermined wavelength range, specifically by reflecting and/or absorbing. The wavelength range may be fixed. A fixed wave-length length may be unchangeable and/or static. The optical properties of the static filter may not be time-varying.

The term "tunable filter" as used herein is a broad term and is to be given its ordinary and customary meaning to a person of ordinary skill in the art and is not to be limited to a special or customized meaning. The term specifically may refer, without limitation, to an optical filter which blocks and/or selects light of an adjustable wavelength range. The optical properties of the tunable filter may be time-varying. An interferometer may be used as a tunable filter, specifically a Fabry-Perot interferometer, Mach-Zehnder interferometer and/or a Michelson interferometer. Alternatively, angle-dependent wavelength shifts of a static filter may be utilized. This may be realized by using at least one micro electro mechanical system, MEMS, where moving parts of the interferometer are realized be using micro actuators.

The term "diffractive element" as used herein is a broad term and is to be given its ordinary and customary meaning to a person of ordinary skill in the art and is not to be limited to a special or customized meaning. The term specifically may refer, without limitation, to an item for shaping the incident radiation by diffraction of the incident radiation at an optical grating.

The length variable filter may comprise at least two bandpass filters, wherein each bandpass filter may be assigned to a respective pixelated sensor by being arranged within the field of view of the respective pixelated sensor, wherein each bandpass filter may be configured for selecting at least one wavelength of the accepted incident radiation. The term "bandpass filter" as used herein is a broad term and is to be given its ordinary and customary meaning to a person of ordinary skill in the art and is not to be limited to a special or customized meaning. The term specifically may refer, without limitation, to an optical filter that allows only incident radiation having a wavelength that is within a predefined range to pass. Incident radiation having a wavelength be-low and/or above the predefined range may be blocked or may be significantly attenuated. The selected at least one wavelength may be within the predefined range. The selected at least one wavelength may be transferred onto the respective pixelated sensor. The term "assigned to a respective pixelated sensor" as used herein is a broad term and is to be given its ordinary and customary meaning to a person of ordinary skill in the art and is not to be limited to a special or customized meaning. The term specifically may refer, without limitation, to transmitting the accepted incident radiation onto the respective pixelated sensor. Thereby, the at least two bandpass filters may be arranged in a manner that each bandpass filter of the at least two bandpass filters is placed within a field of view of a different pixelated sensor.

The length variable filter may comprise at least two bandpass filters, wherein each bandpass filter may be arranged in the field of view of a specific photosensitive element, wherein each bandpass filter may be configured for selecting at least one wavelength range of the detection light.

The mobile device may be selected from at least one of:
- a mobile communication device;
- a mobile spectroscopy device;
- a mobile multi-sensor device; and
- an internet-of-things, IOT, device.

In a further aspect, a method for operating a mobile device comprising at least one spectrometer device is disclosed. For this aspect, reference may be made to any definition, Embodiment and/or further aspect as disclosed elsewhere herein. The steps of the method for operating a mobile device may be performed in the given order. A different order, however, may also be feasible. Further, two or more of the method steps may be performed simultaneously. Thereby, the method steps may at least partly overlap in time. Further, the method steps may be performed once or repeatedly. Thus, one or more or even all of the method steps may be performed once or repeatedly. The method may comprise additional method steps, which are not listed herein.

The method for operating a mobile device may be a computer-implemented method. Alternatively or in addition, at least one of the method steps, preferably any one of the method steps, which involve the use of an evaluation unit, may be performed by using a device comprising at least one processor for executing the steps. The term "computer implemented method" as used herein is a broad term and is to be given its ordinary and customary meaning to a person of ordinary skill in the art and is not to be limited to a special or customized meaning. The term specifically may refer, without limitation, to a method, which involves at least one apparatus, specifically a computer, or a plurality of apparatus, particularly connected via a computer network. The plurality of apparatus may be connected, particularly for transmitting data, via a network by using at least one connection interface at any one of the apparatuses of the plurality of apparatus. The computer-implemented method may be implemented as at least one computer program that may be provided on a storage medium carrying the computer program, whereby at least one of the steps of the computer-implemented method are performed by using the at least one computer program. Preferably any one of the steps may be performed using the at least one computer program. Alternatively, the at least one computer program may be accessible by an apparatus which may be adapted for performing the method via a network, such as via an in-house network, via internet, or via a cloud. With particular regard to the present invention, the present method can, thus, be performed on a programmable apparatus, which is configured for this purpose, such as by providing a computer program, which is configured for such a purpose.

The method comprises the following steps:
a. obtaining at least one item of procedure information on an operating state of the spectrometer device by using the spectrometer device;
b. providing the item of procedure information on an operating state of the spectrometer device to a receiving control unit of the protective case as disclosed elsewhere herein by using a further connection interface comprised by the spectrometer device.

In a further aspect, a method for driving a cover comprised by a protective case as disclosed elsewhere herein is disclosed. For this aspect, reference may be made to any definition, Embodiment and/or further aspect as disclosed elsewhere herein. The steps of the method for driving a cover comprised by a protective case may be performed in the given order. A different order, however, may also be feasible. Further, two or more of the method steps may be performed simultaneously. Thereby, the method steps may at least partly overlap in time. Further, the method steps may be performed once or repeatedly. Thus, one or more or even all of the method steps may be performed once or repeatedly. The method may comprise additional method steps, which are not listed herein.

The method for driving a cover comprised by a protective case may be a computer-implemented method. Alternatively or in addition, at least one of the method steps, preferably any one of the method steps, which involve the use of an evaluation unit, may be performed by using a device comprising at least one processor for executing the steps. The term "computer implemented method" as used herein is a broad term and is to be given its ordinary and customary meaning to a person of ordinary skill in the art and is not to be limited to a special or customized meaning. The term specifically may refer, without limitation, to a method, which involves at least one apparatus, specifically a computer, or a plurality of apparatus, particularly connected via a computer network. The plurality of apparatus may be connected, particularly for transmitting data, via a network by using at least one connection interface at any one of the apparatuses of the plurality of apparatus. The computer-implemented method may be implemented as at least one computer program that may be provided on a storage medium carrying the computer program, whereby at least one of the steps of the computer-implemented method are performed by using the at least one computer program. Preferably any one of the steps may be performed using the at least one computer program. Alternatively, the at least one computer program may be accessible by an apparatus which may be adapted for performing the method via a network, such as via an in-house network, via internet, or via a cloud. With particular regard to the present invention, the present method can, thus, be performed on a programmable apparatus, which is configured for this purpose, such as by providing a computer program, which is configured for such a purpose.

The method comprises the following steps:
a) receiving at least one item of procedure information on an operating state of the spectrometer device from the providing spectrometer device by using a connection interface comprised by the protective case;
b) driving at least one actuator comprised by the protective case in order to bring a cover comprised by the protective case from a first position into a second position, or vice versa, depending on the received item of procedure information on an operating state of the spectrometer device by using a control unit comprised by the protective case.

In a further aspect, a computer program is disclosed comprising instructions which, when the program is executed by a computer, cause the computer to perform the method as disclosed elsewhere herein. The computer may be a spectrometer device as disclosed elsewhere herein, particularly the evaluation unit of the spectrometer device, or the protective case as disclosed elsewhere herein, particularly the control unit comprised by the protective case. For this aspect, reference may be made to any definition, Embodiment and/or further aspect as disclosed elsewhere herein.

In a further aspect, a non-transitory computer-readable storage medium is disclosed, the computer-readable storage medium including instructions that when executed by a computer, cause the computer to perform the method as disclosed elsewhere herein. The computer may be a spectrometer device, particularly the evaluation unit of the spectrometer device as disclosed elsewhere herein, or the protective case as disclosed elsewhere herein, particularly the control unit comprised by the protective case. For this aspect, reference may be made to any definition, Embodiment and/or further aspect as disclosed elsewhere herein.

As used herein, the "computer-readable storage medium" specifically may refer to non-transitory data storage means, such as a hardware storage medium having stored thereon computer-executable instructions. The stored computer-executable instruction may be associate with the computer program. The computer-readable data carrier or storage medium specifically may be or may comprise a storage medium such as a random-access memory (RAM) and/or a read-only memory (ROM).

As used herein, the "computer-readable storage medium" specifically may refer to non-transitory data storage means, such as a hardware storage medium having stored thereon computer-executable instructions. The stored computer-executable instruction may be associate with the computer program. The computer-readable data carrier or storage medium specifically may be or may comprise a storage medium such as a random-access memory (RAM) and/or a read-only memory (ROM).

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, nonwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The method for calibrating the spectrometer device for obtaining at least one item of spectral the protective case for a mobile device, the system, the method for operating a mobile device and the method for driving a cover comprised by a protective case, the computer program and the non-transitory computer-readable storage medium discussed elsewhere herein provide a large number of advantages over known devices and methods of similar kind. In particular they increase a user acceptance and ease the daily use of the spectrometer device.

Spectrometer devices may need additional accessories to do spectroscopic measurements. By integrating these accessories in the protective case the user may have everything he might need at hand. Consequently, it may be prevented that the user won't use spectroscopic measurements because he hasn't the needed accessories with him all the time, which increases the user acceptance. By providing accessories to the user to assist the measurements, it may be avoided that measurements are done wrong, therefore the quality of the results is increased and the user can be provided with better measurement results.

Furthermore by automating processes, such as e.g. the calibration process, possible errors may be avoided and the use of the system may be easier for the user, which might increases the usability.

A further advantage may be a protected sample interface. Again, all accessories needed might be at hand so that it is easier for the user to do spectroscopic measurements. A calibration process done right by the user by assisting via software or by automating the actuator might be a further advantage, particularly when using a control unit and a connection interface. In addition, an increased measurement quality might be an advantage that is achieved by assisting the user with further measurement modules to place the sample in the right position.

The present invention relates to integrating functionalities and/or accessories needed for spectroscopic measurement in a protection case for consumer spectroscopic devices.

A mechanism of the protective case for a mobile device may bring a reference target in the optical path of the spectrometer device in order to calibrate the spectrometer. The mechanism may comprise a cover, such as a slider, comprising a reference target. The mechanism may be moved by hand.

To assist the user in performing measurements the mechanism may be automated. An electronic circuit and/or a motor may be comprised by the protective case and, e.g., may be used to perform an automated calibration, particularly by automatically switching between measurement object and reference target. The electronic circuit may be connected in to the mobile device and may be controlled by an app running on the mobile device.

The protective case may further offer protection for the optical components, e.g., a scratch protection for a lens of a camera of the mobile device.

The protective case may further be employed to adapt the optical path to better measure specific targets. Such specific targets may have a specific form, e.g., round. Further the specific targets may be a body part, e.g., a finger, a finger nail, a cheek. The protective case may further comprise a measurement module, such as a socket, to attach specific accessories to the protective case. Thereby, the measurement on the specific targets may further be improved. Also specific measurements may be performed, e.g., measurements on or in liquids. The protective case may further comprise a further measurement module, such as a holder, for certain forms, e.g., a holder for round objects. The holder may further support a body part, e.g., finger, finger nail, cheek.

The protective case may further comprise a storage unit for accessories while unused. Such accessories may be a cleaning device.

Summarizing and without excluding further possible embodiments, the following embodiments may be envisaged:
Embodiment 1: A protective case for a mobile device, the protective case comprising:
   (1) at least one calibration target, wherein the calibration target is configured for being illuminated by illumination light of a spectrometer device comprised by the mobile device in order to generate detection light from the calibration target during a calibration process of the spectrometer device when the mobile device is arranged in the protective case.
Embodiment 2: The protective case according the preceding Embodiment, wherein the calibration target is or comprises a material selected from at least one of:
   - at least one layer of Polytetrafluoroethylene (PTFE),
   - at least one optical coating, such as a white surface coating or at least one color coating, e.g. a near infra-red reflecting color coating,
   - a dielectric coating, at least one partially reflective dielectric mirror,
   - at least one metal coating or metal foil comprising one or more of gold, silver, aluminum, chromium, and at least one beam splitter;
   - at least one optical grating;
   - at least one ceramics;
   - at least one leather, such as suede leather.
Embodiment 3: The protective case according to any one of the preceding Embodiments, the protective case further comprising:
   (2) at least one aperture, wherein the aperture is arranged in a manner that at least one object is illuminated by the illumination light of the spectrometer device in order to generate detection light from the object during a spectral measurement process using the spectrometer device when the mobile device is arranged in the protective case.
Embodiment 4: The protective case according to the preceding Embodiment, wherein, when the aperture is arranged in a manner that the object is illuminated by the illumination light of the spectrometer device in order to generate the detection light from the object during the spectral measurement process using the spectrometer device, at least one of:
   - a beam path of the illumination light;
   - a beam path of the detection light;
   traverses the aperture.
Embodiment 5: The protective case according to any one of the two preceding Embodiments, wherein the aperture comprises a window that is transparent for at least one of:
   - the illumination light;
   - the detection light.
Embodiment 6: The protective case according to any one of the preceding Embodiments, the protective case further comprising:
   (3) at least one cover, wherein the calibration target is comprised by the cover, wherein the cover is mechanically moveable in a manner that
   ∘ in a first position of the cover, the calibration target is illuminated by the illumination light in order to generate the detection light from the calibration target during the calibration process when the mobile device is arranged in the protective case; and
   ∘ in a second position of the cover, the object is illuminated by the illumination light in order to generate the detection light from the object during the spectral measurement process when the mobile device is arranged in the protective case
   ∘ optionally in a third position of the cover, wherein any light, such as at least one of:
      ∘ environmental light;
      ∘ illumination light;
      is prevented from entering the spectrometer device, particularly wherein for preventing any light from entering the spectrometer device, a sample interface of the spectrometer device is fully covered by the cover and no illumination light is emitted by the spectrometer device.
Embodiment 7: The protective case according to the preceding Embodiment, wherein, in the first position of the cover,
   the beam path of the illumination light impinges on the calibration target comprised by the cover when the mobile device is arranged in the protective case, particularly in a manner that the calibration target generates the detection light.
Embodiment 8: The protective case according to any one of the two preceding Embodiments, wherein, in the second position of the cover,
   the beam path of the illumination light and the detection light is free of an influence of the cover when the mobile device is arranged in the protective case, specifically free from being blocked by the cover, particularly in a manner that the illumination light and the detection light travers the aperture.
Embodiment 9: The protective case according to any one of the three preceding Embodiments, wherein, for the cover being mechanically moveable, the cover is or comprises at least one of:
   - a sliding mechanism;
   - a rotating mechanism;
   - a folding mechanism.
Embodiment 10: The protective case according to any one of the four preceding Embodiments, wherein in the first position of the cover the cover covers the aperture.
Embodiment 11: The protective case according to any one of the five preceding Embodiments, wherein in the second position of the cover the cover leaves the aperture at least partially uncovered.
Embodiment 12: The protective case according to any one of the preceding Embodiments, the protective case further comprising:
   (4) one or more further apertures, wherein the one or more further apertures are arranged in a manner that at least one lens of at least one image generation unit comprised by the mobile device is uncovered by the protective case during a measurement process using the image generation unit when the mobile device is arranged in the protective case.
Embodiment 13: The protective case according to the preceding Embodiment, wherein
   - in the first position of the cover, the cover covers the at least one lens of at least one image generation unit, and
   - in the second position of the cover, the at least one lens of at least one image generation unit is uncovered by the cover.
Embodiment 14: The protective case according to any one of the preceding Embodiments, the protective case further comprising:
   (5) at least one actuator, wherein the actuator is configured for bringing the cover from the first position into the second position and vice versa.
Embodiment 15: The protective case according to the preceding Embodiment, the protective case further comprising:
   (6) at least one control unit, wherein the control unit is configured for driving the actuator depending on at least one item of procedure information on the operating state of the spectrometer device.
Embodiment 16: The protective case according to the preceding Embodiment, wherein the item of procedure information on the operating state spectrometer device comprises at least one of:
   - information on conducting the calibration procedure of the spectrometer device;
   - information on conducting the spectral measurement procedure using the spectrometer device;
   - information on conducting no measurement using the spectrometer device or a camera of the mobile device
   - information on the position of the cover;
   - information on an item of procedure information on the operating state of the mobile device, such as an intended use of the camera of the mobile device.
Embodiment 17: The protective case according to any one of the two preceding Embodiments, wherein the control unit is configured for
   - driving the actuator in a manner that the cover is in the first position during a calibration procedure;
   - driving the actuator in a manner that the cover is in the second position during the spectral measurement procedure.
Embodiment 18: The mechanical protection according to any one of the three preceding Embodiments, the protective case further comprising:
   (7) at least one connection interface, wherein the connection interface is configured for receiving the item of procedure information on an operating state of the spectrometer device, particularly from the providing mobile device.
Embodiment 19: The protective case according to any one of the preceding Embodiments, the protective case further comprising:
   (8) at least one measurement module, wherein the measurement module is reversibly attachable to the protective case, wherein the measurement module is configured for
   - bringing at least one specific object in at least one specific pose during the spectral measurement procedure when the mobile device is arranged in the protective case,
   particularly in a manner that a measurement spot of the spectrometer device is on a predefined measurement position of the object.
Embodiment 20: The protective case according to any one of the preceding Embodiments, the protective case further comprising:
   (9) at least one further measurement module, wherein the further measurement module is reversibly attachable to the protective case, wherein the further measurement module is configured for modifying the beam path of at least one of
   - the illumination light,
   - the detection light
   during the spectral measurement procedure when the mobile device is arranged in the protective case, particularly in a manner that a measurement spot of the spectrometer device is on a predefined measurement position of the object.
Embodiment 21: The protective case according to any one of the preceding Embodiments, the protective case further comprising:
   (10) at least one storage unit, wherein the storage unit is configured for storing at least on accessory, particularly wherein the accessory is selected from at least one of:
   - the measurement module;
   - the further measurement module;
   - a cleaning device.
Embodiment 22: A system comprising:
   - a protective case according to any one of the preceding Embodiments;
   - a mobile device comprising a spectrometer device,
   wherein the protective case is configured for receiving the mobile device in a manner that the mobile device is arranged in the protective case.
Embodiment 23: The system according to the preceding Embodiment referring to a system, wherein the spectrometer device comprises:
   1) at least one light emitting element, wherein the light emitting element is configured for emitting illumination light for illuminating at least one of:
      - the at least one calibration target during the calibration procedure;
      - the at least one object during the spectral measurement procedure in order to generate detection light;
   2) at least one detector configured for generating at least one detector signal when receiving the detection light;
   3) at least one evaluation unit configured for obtaining at least one item of spectral information by evaluating the detector signal.
Embodiment 24: The system according to the preceding Embodiment referring to a system, wherein the at least one detector comprises a plurality of photosensitive elements sensitive to differing wavelength intervals.
Embodiment 25: The system according to any one of the preceding Embodiments referring to a system, wherein the spectrometer device further comprises at least one wavelength-selective element, wherein the wavelength-selective element is disposed in at least one of:
   - a beam path of the illumination light; or
   - a beam path of the detection light.
Embodiment 26: The system according to the preceding Embodiment referring to a system, wherein the at least one the wavelength-selective element is configured and/or arranged in a manner that any photosensitive element of the plurality of photosensitive elements is exposed to an individual spectral range of detection light.
Embodiment 27: The system according to any one of the preceding Embodiments referring to a system, wherein the mobile device is selected from at least one of:
   - a mobile communication device;
   - a mobile spectroscopy device;
   - a mobile multi-sensor device; and
   - an internet-of-things, IOT, device.
Embodiment 28: A method for operating a mobile device comprising at least one spectrometer device; the method comprising the following steps:
   a. obtaining at least one item of procedure information on an operating state of the spectrometer device by using the spectrometer device;
   b. providing the item of procedure information on an operating state of the spectrometer device to a receiving control unit of the protective case according to anyone of the preceding embodiments by using a further connection interface comprised by the spectrometer device.
Embodiment 29: A method for driving a cover comprised by a protective case according to any one of the preceding embodiments; the method comprising the following steps:
   a) receiving at least one item of procedure information on an operating state of the spectrometer device from the providing spectrometer device by using a connection interface comprised by the protective case;
   b) driving at least one actuator comprised by the protective case in order to bring a cover comprised by the protective case from a first position into a second position, or vice versa, depending on the received item of procedure information on an operating state of the spectrometer device by using a control unit comprised by the protective case.
Embodiment 30: A computer program comprising instructions which, when the program is executed by a computer, cause the computer to perform the method according to any one of the preceding method Embodiments.
Embodiment 31: The computer program according to the preceding Embodiment, wherein the computer is a spectrometer device according to any one of the preceding Embodiments referring to a spectrometer device, particularly the evaluation unit of the spectrometer device, or a protective case according to any one of the preceding Embodiments referring to a protective case, particularly the control unit comprised by the protective case.
Embodiment 32: A non-transitory computer-readable storage medium, the computer-readable storage medium including instructions that when executed by a computer, cause the computer to perform the method according to any one of the preceding method Embodiments.
Embodiment 33: The non-transitory computer-readable storage medium according to the preceding Embodiment, wherein the computer is a spectrometer device according to any one of the preceding Embodiments referring to a spectrometer device, particularly the evaluation unit of the spectrometer device, or the protective case according to any one of the preceding Embodiments referring to a protective case, particularly the control unit comprised by the protective case.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an exemplary protective case for a mobile device comprising a spectrometer device;
- Figure 2: shows a cover of the protective case in a first position;
- Figure 3: shows the cover of the protective case in a second position;
- Figure 4: shows a schematic sketch of a spectrometer device and a mobile device;
- Figure 5: shows an exemplary workflow of a method for operating the mobile device comprising the spectrometer device; and
- Figure 6: shows an exemplary workflow of a method for driving the cover comprised by a protective case.

Detailed description of the embodiments

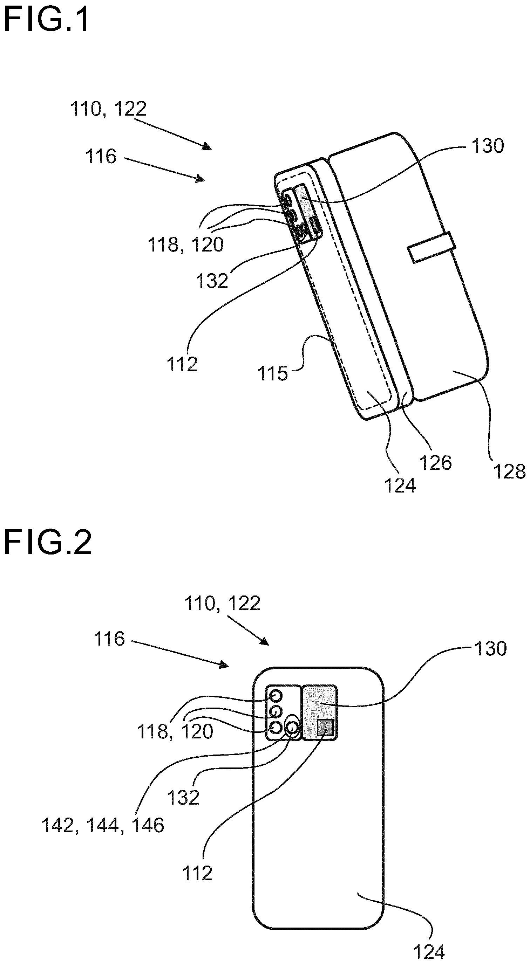

In Figure 1, a protective case 110 for a mobile device 115 is shown. The protective case 110 comprises at least one calibration target 112, wherein the calibration target 112 is configured for being illuminated by illumination light 152 of a spectrometer device 114. The spectrometer device 114 is comprised by the mobile device 115 in order to generate detection light 154 from the calibration target 112 during a calibration process of the spectrometer device 114 when the mobile device 115 is arranged in the protective case 110.

Further, in Figure 1 a system 116 is shown. The system comprises the protective case 110 as disclosed elsewhere herein and the mobile device 115 comprising a spectrometer device 114 as disclosed elsewhere herein. The protective case 110 is configured for receiving the mobile device 115 in a manner that the mobile device 115 is arranged in the protective case 110.

The mobile device 115 may comprise at least one image generation unit 118. The image generation unit 118 may be at least one camera, particularly at least one back camera of the mobile device 115. The image generation 118 unit may comprise at least one lens 120. The mobile device 115 may be selected from at least one of a mobile communication device; a mobile spectroscopy device; a mobile multi-sensor device; and an internet-of-things, IOT, device.

The protective case 110 may be a mechanical protection case configured for safeguarding the mobile device 115 from mechanical damage, such as scratches, dents, drops and impacts. The protective case 110 may be, typically, made of at least one material configured for absorbing mechanical stress. The material may be selected from at least one of: plastic, rubber, silicone, leather, metal, wood. The protective case 110 may comprise a case body 122. The case body 122 may comprise a rear cover 124 configured to cover the backside of the mobile device 115. The case body 122 may comprise at least one side cover 126 configured to cover the side of the mobile device 115. The case body 122 may comprise at least one movable front cover 128 configured to cover the display of the mobile device 115. The mobile device 115 may be reversibly attachable to the protective case 110. When the mobile device 115 is attached to the protective case 110, the mobile device 115 may be arranged in the protective case 110. For the mobile device 115 being reversibly attachable to the protective case 110, the protective case 110 may comprise a mechanism. The mechanism may be at least one of: a snap-on mechanism, a slide-in mechanism, a locking mechanism, a magnet hold mechanism, an adhesive mechanism, a fast-screw mechanism. The snap-on mechanism may be formed by the side cover 126 being a deformable lip. The protective case 110 may further comprise at least one cover 130, wherein the calibration target 112 is comprised by the cover 130. The cover 130 may be mechanically moveable. For the cover 130 being mechanically moveable, the cover 130 may be or may comprise at least one of a sliding mechanism, a rotating mechanism, and/or a folding mechanism.

The calibration target 112 may be arranged at the back side of the protective case 110. The calibration target 112 may be or may comprise a material selected from at least one of: at least one layer of Polytetrafluoroethylene (PTFE); at least one optical coating, such as a white surface coating or at least one color coating, e.g. a near infra-red reflecting color coating; a dielectric coating, at least one partially reflective dielectric mirror; at least one metal coating or metal foil comprising one or more of gold, silver, aluminum, chromium, and at least one beam splitter; at least one optical grating; at least one ceramics; at least one leather, such as suede leather.

The protective case 110 may further comprise at least one aperture 132. The aperture 132 may be arranged in a manner that at least one object 134 is illuminated by the illumination light 152 of the spectrometer device 114 in order to generate detection light 154 from the object 134 during a spectral measurement process using the spectrometer device 114 when the mobile device 115 is arranged in the protective case 110. At least one of a beam path of the illumination light 152 and a beam path of the detection light 154 may traverse the aperture 132. The aperture 132 may comprise a window that is transparent for at least one of the illumination light 152 and the detection light 154. The protective case 110 may further comprise one or more further apertures 132, wherein the one or more further apertures 132 are arranged in a manner that the at least one lens 120 of the at least one image generation unit 118 comprised by the mobile device 115 is uncovered by the protective case 110 during a measurement process using the image generation unit 118 when the mobile device 115 is arranged in the protective case 110.

In Figure 2, the protective case 110 for a mobile device 115 from Figure 1 is shown in a back view. The cover 130 comprised by the protective case 110 is shown in a first position. In the first position of the cover 130, the beam path of the illumination light 152 may impinge on the calibration target 112 comprised by the cover 130 when the mobile device 115 is arranged in the protective case 110. In the first position of the cover 130, the calibration target 112 may be illuminated by the illumination light 152 in order to generate the detection light 154 from the calibration target 112 during the calibration process when the mobile device 115 is arranged in the protective case 110. The calibration target 112 may generate the detection light 154. In the first position of the cover 130, the cover 130 may cover the aperture 132. In the first position of the cover 130, the cover 130 may cover the at least one lens 120 of at least one image generation unit 118.

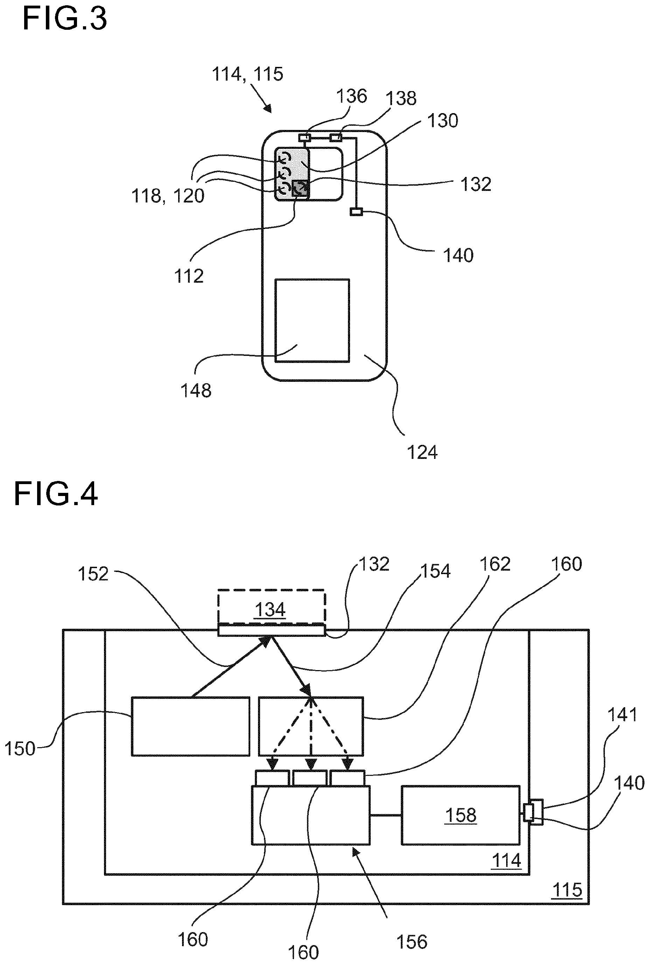

In Figure 3, the protective case 110 for a mobile device 115 from Figure 1 is again shown in a back view. The cover 130 comprised by the protective case 110 is shown in a second position. In the second position of the cover 130, the object 134 is illuminated by the illumination light 152 in order to generate the detection light 154 from the object 134 target during the spectral measurement process when the mobile device 115 is arranged in the protective case 110. In the second position of the cover 130, the beam path of the illumination light 152 and the detection light 154 may be free of an influence of the cover 130 when the mobile device 115 is arranged in the protective case 110, specifically free from being blocked by the cover 130, particularly in a manner that the illumination light 152 and the detection light 154 travers the aperture 132. In the second position of the cover 130, the at least one lens 120 of at least one image generation unit 118 may be uncovered by the cover 130. In the second position of the cover 130, the cover 130 may leave the aperture 132 at least partially uncovered.

Alternatively or in addition, the cover may be in a third position of the cover 130, wherein any light, such as at least one of an environmental light and the illumination light 152 may be prevented from entering the spectrometer device 114. As depicted, the second position of the cover 130 may be used as the third position. For preventing any light from entering the spectrometer device 114, a sample interface of the spectrometer device 114 may be fully covered by the cover 130 and no illumination light 152 may be emitted by the spectrometer device 114.

The protective case 110 may further comprise at least one actuator 136. The actuator 136 may be configured for bringing the cover 130 from the first position into the second position and vice versa. The actuator 136 may be configured for bringing the cover 130 in at least one of the first position, the second position and the third position. The protective case 110 may further comprise at least one control unit 138. The control unit 138 may be configured for driving the actuator 136 depending on at least one item of procedure information on the operating state of the spectrometer device 114. The item of procedure information on the operating state of the spectrometer device 114 may comprise at least one of an:
- information on conducting the calibration procedure of the spectrometer device 114;
- information on conducting the spectral measurement procedure using the spectrometer device 114;
- information on conducting no measurement using the spectrometer device 114 or the image generation unit of the mobile device 115
- information on the position of the cover 130;
- information on an item of procedure information on the operating state of the mobile device 115, such as an intended use of the camera of the mobile device 115.

A control unit 138 may be configured for driving the actuator 136 in a manner that the cover 130 is in the first position during a calibration procedure. Alternatively or in addition, the control unit 138 may be configured for driving the actuator 136 in a manner that the cover 130 is in the second position during the spectral measurement procedure. The protective case 110 may further comprise at least one connection interface 140, wherein the connection interface 140 is configured for receiving the item of procedure information on an operating state of the spectrometer device 114, particularly from the providing mobile device 115. The mobile device 115 may have at least one further connection interface 141 configured for providing the item of procedure information on an operating state of the spectrometer device 114.

The protective case 110 may further comprise at least one measurement module 142. The measurement module 142 may be reversibly attachable to the protective case 110. The measurement module 142 may be configured for bringing at least one specific object 134 in at least one specific pose during the spectral measurement procedure when the mobile device 115 is arranged in the protective case 110. This may also be provided by at least one further measurement module 146 in addition to its purpose. The bringing of the at least one specific object 134 in at least one specific pose may be performed in a manner that a measurement spot of the spectrometer device 114 is on a predefined measurement position of the object 134. For this purpose, the measurement module 142 may comprise a holder 144 for the object 134. The holder 144 may be configured to support the object 134 during a measurement procedure. The object 134 may be reversibly attachable to the measurement module 142 or the holder 144.

The protective case 110 may further comprise the further measurement module 146. The further measurement module 146 may be reversibly attachable to the protective case 110, wherein the further measurement module 146 is configured for modifying the beam path of at least one of the illumination light 152, the detection light 154. This may also be provided by the measurement module 142 in addition to its purpose. The modifying of the beam path may be during the spectral measurement procedure when the mobile device 115 is arranged in the protective case 110. The mobile device 115 may be arranged in a manner that a measurement spot of the spectrometer device 114 is on a predefined measurement position of the object 134. The at least one specific functionality may be modifying the beam path of at least one of the illumination light 152, the detection light 154 during the spectral measurement procedure when the mobile device 115 is arranged in the protective case 110. For this purpose, the measurement module 142 may comprise at least one optical component such as an optical lens, an optical mirror and/or an optical aperture. The optical component may shape and/or modify the beam path of the illumination light 152 and the detection light 154.

The protective case 110 may further comprise at least one storage unit 148. The storage unit 148 may be configured for storing at least on accessory. The accessory may selected from at least one of: the measurement module 142, the further measurement module 146, a cleaning device.

In Figure 4, a schematic sketch of a mobile device 115 comprising a spectrometer device 114 is shown. The spectrometer device 114 may comprise:
1) at least one light emitting element 150, wherein the light emitting element 150 is configured for emitting illumination light 152 for illuminating at least one of:
   - the at least one calibration target 112 during the calibration procedure;
   - the at least one object 134 during the spectral measurement procedure in order to generate detection light 154;
2) at least one detector 156 configured for generating at least one detector 156 signal when receiving the detection light 154;
3) at least one evaluation unit 158 configured for obtaining at least one item of spectral information by evaluating the detector signal.

The at least one detector 156 may comprise a plurality of photosensitive elements 160 sensitive to differing wavelength intervals. The spectrometer device 114 further may comprise at least one wavelength-selective element 162. The wavelength-selective element 162 may be disposed in at least one of a beam path of the illumination light 152 or a beam path of the detection light 154. The at least one the wavelength-selective element 162 may be configured and/or arranged in a manner that any photosensitive element of the plurality of photosensitive elements 160 is exposed to an individual spectral range of detection light 154.

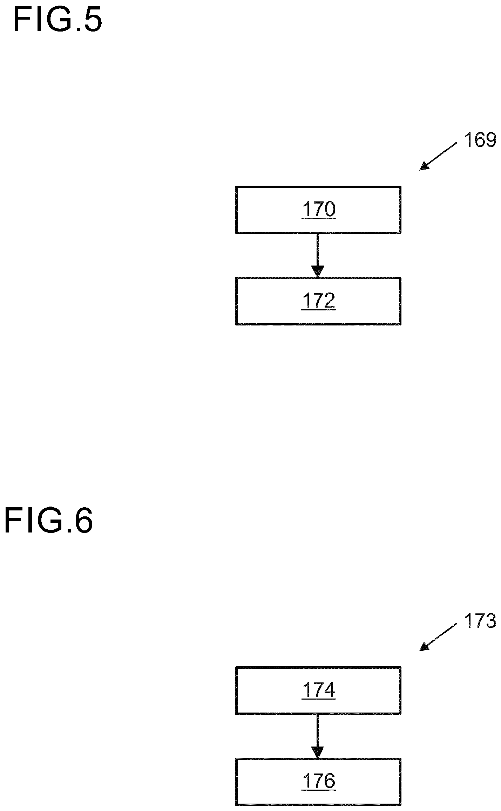

In Figure 5, an exemplary method 169 for operating a mobile device 115 comprising at least one spectrometer device 114 is shown. The method 169 comprises the following steps that may be performed in the given order. However, a different order may also be possible. In particular, one, more than one or even all of the method steps may be performed once or repeatedly. Further, the method steps may be performed successively or, alternatively, one or more of the method steps may be performed in a timely overlapping fashion or even in a parallel fashion and/or in a combined fashion. The method 169 may further comprise additional method steps that are not listed.

The method 169 comprises the following steps:
a. (denoted by reference number 170) obtaining at least one item of procedure information on an operating state of the spectrometer device 114 by using the spectrometer device 114;
b. (denoted by reference number 172) providing the item of procedure information on an operating state of the spectrometer device 114 to a receiving control unit 138 of the protective case 110 as disclosed elsewhere herein by using a further connection interface 141 comprised by the spectrometer device 114.

In Figure 6, an exemplary method 173 for driving a cover 130 comprised by a protective case 110 is shown. The method comprises the following steps that may be performed in the given order. However, a different order may also be possible. In particular, one, more than one or even all of the method steps may be performed once or repeatedly. Further, the method steps may be performed successively or, alternatively, one or more of the method steps may be performed in a timely overlapping fashion or even in a parallel fashion and/or in a combined fashion. The method may further comprise additional method steps that are not listed.

The method 173 comprises the following steps:
a) (denoted by reference number 174) receiving at least one item of procedure information on an operating state of the spectrometer device 114 from the providing spectrometer device 114 by using a connection interface 140 comprised by the protective case 110;
b) (denoted by reference number 176) driving at least one actuator 136 comprised by the protective case 110 in order to bring a cover 130 comprised by the protective case 110 from a first position into a second position, or vice versa, depending on the received item of procedure information on an operating state of the spectrometer device 114 by using a control unit 138 comprised by the protective case 110.

A computer program (not shown) comprises instructions, which, when the program is executed by a computer, cause the computer to perform at least one of the methods as disclosed elsewhere herein. A non-transitory computer-readable storage medium (not shown) includes instructions that when executed by a computer, cause the computer to perform at least one of the methods as disclosed elsewhere herein. The computer may be a spectrometer device 114, particularly the evaluation unit 158 of the spectrometer device 114 as disclosed elsewhere herein, or the protective case 110 as disclosed elsewhere herein, particularly the control unit 138 comprised by the protective case 110.

### List of reference numbers

- 110: protective case
- 112: calibration target
- 114: spectrometer device
- 115: mobile device
- 116: system
- 118: image generation unit
- 120: lens
- 122: case body
- 124: rear cover
- 126: side cover
- 128: front cover
- 130: cover
- 132: aperture
- 134: object
- 136: actuator
- 138: control unit
- 140: connection interface
- 141: further connection interface
- 142: measurement module
- 144: holder
- 146: further measurement module
- 148: storage unit
- 150: light emitting element
- 152: illumination light
- 154: detection light
- 156: detector
- 158: evaluation unit
- 160: photosensitive elements
- 162: wavelength-selective element
- 169: method for operating a mobile device comprising the spectrometer device
- 170: obtaining at least one item of procedure information
- 172: providing the item of procedure information
- 173: method for driving a cover comprised by a protective case
- 174: receiving at least one item of procedure information
- 176: driving at least one actuator comprised by the protective case

## Claims

1. A protective case (110) for a mobile device (115), the protective case (110) comprising:
(1) at least one calibration target (112), wherein the calibration target (112) is configured for being illuminated by illumination light (152) of a spectrometer device (114) comprised by the mobile device (115) in order to generate detection light (154) from the calibration target (112) during a calibration process of the spectrometer device (114) when the mobile device (115) is arranged in the protective case (110).

2. The protective case (110) according to the preceding claim, the protective case (110) further comprising:
(2) at least one aperture (132), wherein the aperture (132) is arranged in a manner that at least one object (134) is illuminated by the illumination light (152) of the spectrometer device (114) in order to generate detection light (154) from the object (134) during a spectral measurement process using the spectrometer device (114) when the mobile device (115) is arranged in the protective case (110).

3. The protective case (110) according to any one of the preceding claims, the protective case (110) further comprising:
(3) at least one cover (130), wherein the calibration target (112) is comprised by the cover (130), wherein the cover (130) is mechanically moveable in a manner that
∘ in a first position of the cover (130), the calibration target (112) is illuminated by the illumination light (152) in order to generate the detection light (154) from the calibration target (112) during the calibration process when the mobile device (115) is arranged in the protective case (110); and
∘ in a second position of the cover (130), the object (134) is illuminated by the illumination light (152) in order to generate the detection light (154) from the object (134) during the spectral measurement process when the mobile device (115) is arranged in the protective case (110).

4. The protective case (110) according to any one of the preceding claims, the protective case (110) further comprising:
(4) one or more further apertures (132), wherein the one or more further apertures (132) are arranged in a manner that at least one lens (120) of at least one image generation unit (118) comprised by the mobile device (115) is uncovered by the protective case (110) during a measurement process using the image generation unit (118) when the mobile device (115) is arranged in the protective case (110).

5. The protective case (110) according to any one of the preceding claims, the protective case (110) further comprising:
(5) at least one actuator (136), wherein the actuator (136) is configured for bringing the cover (130) from the first position into the second position and vice versa.

6. The protective case (110) according to the preceding claim, the protective case (110) further comprising:
(6) at least one control unit (138), wherein the control unit (138) is configured for driving the actuator (136) depending on at least one item of procedure information on the operating state of the spectrometer device (114).

7. The mechanical protection according to any one of the three preceding claims, the protective case (110) further comprising:
(7) at least one connection interface (140), wherein the connection interface (140) is configured for receiving the item of procedure information on an operating state of the spectrometer device (114).

8. The protective case (110) according to any one of the preceding claims, the protective case (110) further comprising:
(8) at least one measurement module (142), wherein the measurement module (142) is reversibly attachable to the protective case (110), wherein the measurement module (142) is configured for
- bringing at least one specific object (134) in at least one specific pose during the spectral measurement procedure when the mobile device (115) is arranged in the protective case (110),
in a manner that a measurement spot of the spectrometer device (114) is on a predefined measurement position of the object (134).

9. The protective case (110) according to any one of the preceding claims, the protective case (110) further comprising:
(9) at least one further measurement module (142), wherein the further measurement module (142) is reversibly attachable to the protective case (110), wherein the further measurement module (142) is configured for modifying the beam path of at least one of
- the illumination light (152),
- the detection light (154)
during the spectral measurement procedure when the mobile device (115) is arranged in the protective case (110) in a manner that a measurement spot of the spectrometer device (114) is on a predefined measurement position of the object (134).

10. The protective case (110) according to any one of the preceding claims, the protective case (110) further comprising:
(10) at least one storage unit (148), wherein the storage unit (148) is configured for storing at least on accessory.

11. A system (116) comprising:
- a protective case (110) according to any one of the preceding claims;
- a mobile device (115) comprising a spectrometer device (114),
wherein the protective case (110) is configured for receiving the mobile device (115) in a manner that the mobile device (115) is arranged in the protective case (110).

12. A method for operating a mobile device (115) comprising at least one spectrometer device (114); the method comprising the following steps:
a. obtaining at least one item of procedure information on an operating state of the spectrometer device (114) by using the spectrometer device (114);
b. providing the item of procedure information on the operating state of the spectrometer device (114) to a receiving control unit (138) of a protective case (110) according to any one of the preceding claims referring to a protective case (110) by using a further connection interface (140) comprised by the spectrometer device (114).

13. A method for driving a cover (130) comprised by a protective case (110) according to any one of the preceding claims; the method comprising the following steps:
a) receiving at least one item of procedure information on an operating state of the spectrometer device (114) from a providing spectrometer device (114) by using a connection interface (140) comprised by the protective case (110);
b) driving at least one actuator (136) comprised by the protective case (110) in order to bring a cover (130) comprised by the protective case (110) from a first position into a second position, or vice versa, depending on the received item of procedure information on the operating state of the spectrometer device (114) by using a control unit (138) comprised by the protective case (110).

14. A computer program comprising instructions which, when the program is executed by a computer, cause the computer to perform the method according to any one of the preceding method claims.

15. A non-transitory computer-readable storage medium, the computer-readable storage medium including instructions that when executed by a computer, cause the computer to perform the method according to any one of the preceding method claims.
